# EUROPEAN PATENT APPLICATION

(11) **EP 1 631 048 A1**
(43) Date of publication of application: **01.03.2006**
(21) Application number: 05018374.8
(22) Date of filing: 24.08.2005
(51) Int. Cl.: H04M 1/725, G04G 9/00

(54) **Method and apparatus for displaying local time of recipient area in communication terminal**

(30) Priority: 24.08.2004 KR 2004066700
(71) Applicant: Samsung Electronics Co., Ltd., Suwon-si, Gyeonggi-Do (KR)
(72) Inventor: Yoon, Bong-No Samsung Electronics Co., Ltd., Suwon-si Gyeonggi-do (KR)
(74) Representative: Lang, Johannes

(57) **Abstract**

A method and an apparatus are provided for displaying a local time of a recipient area in a communication terminal. The communication terminal stores country names corresponding to country codes and a global time table constructed having time differences for the countries in order to display the local time of the recipient area. If the confirmation of the local time is requested, a country and a time difference corresponding to an input country code are confirmed through the global time table, the local time is calculated, and the calculated local time is displayed.

## Description

### BACKGROUND OF THE INVENTION

### Field of the Invention:

The present invention relates to a method and an apparatus for displaying information in a communication terminal. More particularly, the present invention relates to a method and apparatus for displaying a local time of a recipient area while attempting communication with a recipient.

### Description of the Related Art:

Generally, communication terminals are capable of communication between terminals and include such devices as a mobile communication terminal, personal digital assistant (PDA) device, and wired or wireless telephones. These communication terminals display information generated in an idle state or generated during communication. For example, communication terminals such as a mobile communication terminal, PDA device, and wireless telephone, can each display a current time, date, battery capacity, and received signal strength indicator (RSSI) in an idle state, or can display a phone number of a counterpart, current time (of the originator), communication time, and so forth, during communication. A typical wired telephone including a liquid crystal display (LCD) can display a current time, date, and so forth, in an idle state, or can display a phone number of a counterpart, current time (of the originator), communication time, and so forth, during communication.

As described above, such a communication terminal displays simply a communication time during communication. For example, when a user attempts an international call by means of the communication terminal, the communication terminal displays a communication waiting time and a current time of a call originator during the international call attempt. In addition, during communication, the communication terminal displays a communication time and a current time of the call originator.

Accordingly, the user must manually calculate a local date and time of a corresponding country (and perhaps even a corresponding city in larger countries) of a recipient area with which the user wants to communicate. The user can confirm the local time of the corresponding country by calculating the current time of the corresponding country through a notebook computer or by calculating a time difference through a dual time function, and then attempt to make the communication. In addition, the user can also recognize the local time of the recipient area based on a global time map provided by a mobile communication terminal, and then attempt to make the communication.

However, since a screen of the conventional mobile communication terminal displays only a limited number of cities on a world map showing the global time, the user may not recognize a date and a time of the location of a city with which the user wants to communicate if the user does not know the exact location of the city on the world map. For example, although the user knows a country code, where the user does not know the exact location of a country corresponding to the country code with which the user wants to connect, the user cannot find the location of the desired country on the world map displayed on the screen.

There is currently no method in which a user can instantly know a local time of a desired recipient area while attempting communication.

Accordingly, a need exists for a system and method for determining a local time of a desired recipient area while attempting communication, wherein the local time of the recipient area can be confirmed through a country code.

### SUMMARY OF THE INVENTION

Accordingly, the present invention has been made to substantially solve the above-mentioned and other problems occurring in the prior art, and an object of the present invention is to provide a method for displaying a local time of a recipient area by using a connection number for the recipient area in a communication system and a terminal using the same.

Another object of the present invention is to provide a method allowing a user to determine a local time of a recipient area without additional menu manipulation in a communication system and a terminal using the same.

To accomplish the above and other objects, a communication terminal is provided that is capable of making an international call in a mobile communication system, the communication terminal comprising a memory for storing a global time table including countries corresponding to country codes and time differences according to the countries, a controller for calculating a time of a recipient area based on the global time table stored in the memory by confirming a connection number input from a user when the user inputs the connection number, and a display module for displaying the calculated time of the call receiving area.

The communication terminal further comprises a key input module including a button used if a request for the local time is desired when the user inputs the connection number.

The memory further comprises city names corresponding to city codes, and time differences corresponding to the cities.

The controller calculates a local time of the recipient area using the global time table stored in the memory after the input country code is confirmed and, if a country has several time differences, calculates the local time of the recipient area by confirming the input city code.

According to another aspect of the present invention, a method is provided for displaying a local time of a recipient area in a mobile communication system, the method comprising the steps of receiving a connection number for the call receiving area, calculating the local time of the recipient area using a global time table previously stored in a memory based on the received connection number, and displaying the calculated local time of the recipient area on a display module.

The method can further comprise a step of determining if a user requests the local time when an international dialing code provided by a service provider is included in the received connection number.

The method can further comprise the steps of calculating a local time of a country using the global time table stored in the memory after a country code is confirmed in the received connection number, and calculating the local time of the recipient area after a city code is confirmed in the received connection number when the country has several time differences (or zones).

The time differences stored in the global time table are preferably calculated based on Greenwich mean time (GMT).

The method can further comprise a step of displaying the calculated local time, the calculated local date, and the corresponding country.

### BRIEF DESCRIPTION OF THE DRAWINGS

The above and other objects, features and advantages of embodiments of the present invention will become more apparent from the following detailed description taken in conjunction with the accompanying drawings, in which:
FIG 1 illustrates an internal structure of a mobile communication terminal according to an embodiment of the present invention;
FIG. 2 is a flowchart illustrating a method of displaying a local time of a recipient area according to an embodiment of the present invention; and
FIG. 3 illustrates an image showing a local time of a recipient area according to an embodiment of the present invention.

Throughout the drawings, like reference numerals will be understood to refer to like parts, components and structures.

### DETAILED DESCRIPTION OF THE EXEMPLARY EMBODIMENTS

Hereinafter, exemplary embodiments of the present invention will be described in detail with reference to the accompanying drawings. In the following description, detailed descriptions of known functions and configurations incorporated herein are omitted for clarity and conciseness.

Generally, when making an international call, a user selects one of the international dialing codes provided by several service providers enabling international call connection, inputs a country code and an area code of a country and a city with which the user wants to communicate, and then inputs a phone number of a counterpart, thereby establishing communication. As described above, according to embodiments of the present invention, when a user attempts an international call, a local date and a local time of a recipient area can be displayed on a screen of a terminal, thereby realizing a function for enabling the user to confirm the local date and the local time during the communication attempt.

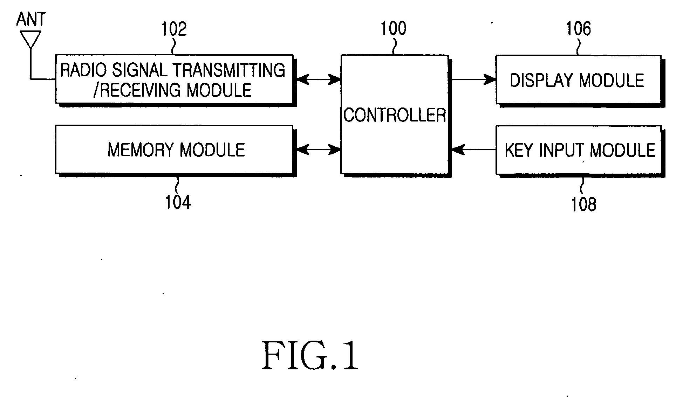

Hereinafter, an internal structure of an apparatus for realizing a function for displaying a local date and a local time of a recipient area on a screen of a terminal will be described with reference to FIG. 1. FIG. 1 illustrates an internal structure of a mobile communication terminal according to an embodiment of the present invention. According to embodiments of the present invention, a mobile communication terminal will be described as an example of a device capable of confirming a local date and a local time of a call receiving side. Herein, it is noted that other communication terminals, such as a wired telephone, can also be employed in embodiments of the present invention in addition to a mobile communication terminal, even though only a mobile communication terminal is employed for the purpose of the following description.

As shown in FIG. 1, a mobile communication terminal according to an embodiment of the present invention comprises a controller 100, a radio signal transmitting/receiving module 102, a memory module 104, a display module 106, and a key input module 108. The mobile communication terminal can further comprise an antenna (ANT) coupled with the radio signal transmitting/receiving module 102. The controller 100 performs processes and controls for a variety of functions including telephone conversation, data communication, Internet connection, and so forth. According to embodiments of the present invention, if there is a request for displaying a local time of a call receiving side, the controller 100 controls the display of the local time after the calculation of the local time in addition to typical functions of the controller 100.

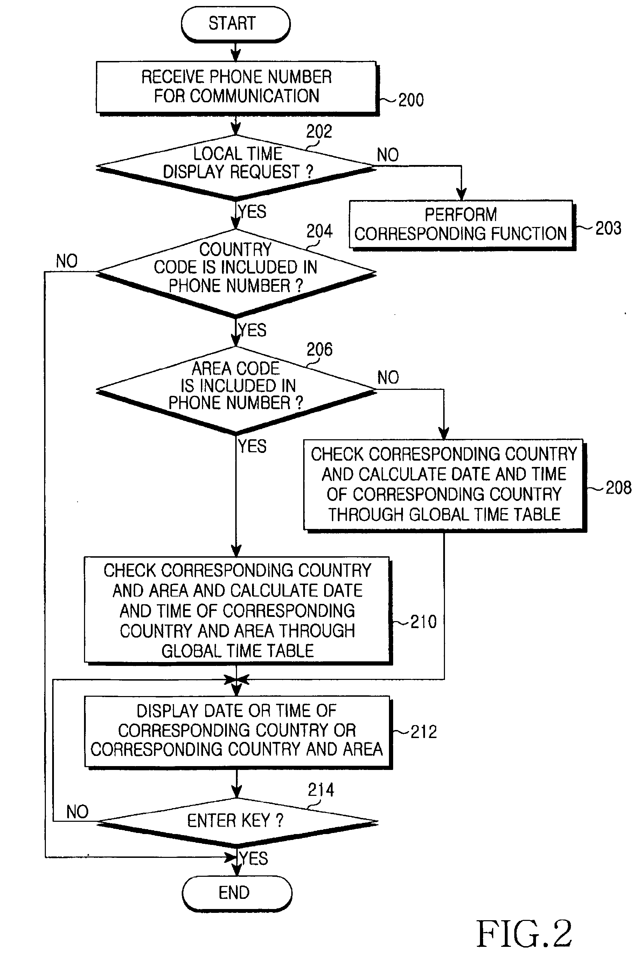

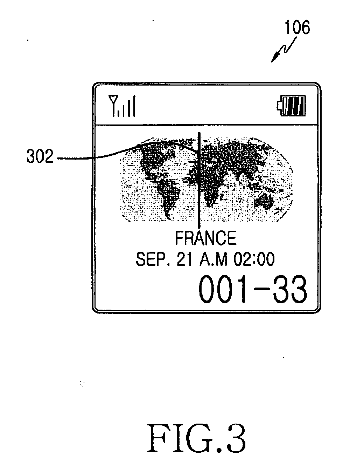

If a user inputs a phone number, the controller 100 receives an input signal corresponding to the input phone number. Thereafter, if the controller 100 receives a request for the confirmation of the local time, the controller 100 checks a country code based on the input phone number. Then, the controller 100 performs a control operation such that a country corresponding to the country code is confirmed based on a global time table, a local time of the confirmed country is calculated, and then the calculated local time is displayed. The operation of the controller 100 when performing a control operation such that the local time is displayed as described above, will be described in greater detail below with reference to FIGS. 2 and 3.

The radio signal transmitting/receiving module 102 transmits and receives a radio signal to and from a base station through the antenna (ANT). The radio signal transmitting/receiving module 102 modulates a signal to be transmitted that is input from the controller 100, and transmits an RF signal through the antenna. The radio signal transmitting/receiving module 102 also demodulates an RF signal received through the antenna and provides the demodulated RF signal to the controller 100.

The key input module 108 provides a key input signal to the controller 100 corresponding to a key pressed by the user. In particular, according to embodiments of the present invention, the key input module 108 comprises a local time display key for confirming a local time of a recipient area corresponding to the phone number with which the user intends to communicate. The local time display key may be used by setting an incoming call rejection function with respect to a key already included in the mobile communication terminal. In addition, the local time display key may be additionally included in the mobile communication terminal. For example, an "Enter" key, "#" key, or "*" key may be set as the local time display key.

The memory module 104 temporarily stores programs performed by the controller 100 and data processed by the programs. In addition, the memory module 104 stores a received short message and a phone number table. Such a memory module 104 may comprise a RAM, EEPROM, or ROM for storing operation programs. In particular, according to embodiments of the present invention, the memory module 104 stores a global time table for mapping country codes with countries corresponding to the country codes, and for storing time difference information for each country and for each city in larger countries. In a case of a terminal used in countries employing an international dialing code, the international dialing code is also stored in the memory module 104.

As described above, an exemplary global time table stored in the memory module 104 can be shown as in Table 1 below.

**Table 1**

| Country code | Country | Time difference |
|---|---|---|
| 66 | Bangkok | GMT + 7:00 |
| 82 | Korea | GMT + 9:00 |
| 30 | Greece | GMT + 2:00 |
| 01 | Guam | GMT + 10:00 |
| • | • | • |
| • | • | • |
| • | • | • |

Table 1 comprises a country code, a country, and a time difference. Herein, the time difference is preferably calculated based on a Greenwich mean time (GMT).

Table 1 shows examples of countries having one standard time. However, in the case of a country such as the United States having several standard times, city identification numbers and time differences corresponding to the city identification numbers can be included and stored.

The display module 106 displays a current state of a terminal or the change of a program progression state. To do so, the display module 106 may comprise a liquid crystal display device. In addition, the display module 106 displays image information according to the controller 100 on a screen of the terminal. In particular, according to embodiments of the present invention, the display module 106 displays a local time of a recipient area according to the control operation of the controller 100 as shown in FIG. 3 and described in greater detail below.

Hereinafter, a method for confirming a local time of a recipient area in a mobile communication terminal having the structure shown in FIG. 1 will be described with reference to FIG. 2. FIG. 2 is a flowchart illustrating a method of displaying the local time of the recipient area according to an embodiment of the present invention.

For example, if a user selects '001' as an international dialing code when originating an international call to Paris, France, an originated number becomes "001-33-1-xxx-xxxx". If the user inputs a phone number for communication through the key input module 108 as described above, the controller 100 receives key input signals in step 200. Then, the controller 100 confirms the received number as a number for an international call and determines if a request for confirming a local time is necessary or desired in step 202. Step 202 is performed by recognizing the international dialing code in the received number and awaiting a user request input. Thereafter, if the request for confirming a local time of a recipient area is received from the user in step 202, the controller 100 goes to step 204. Otherwise, the controller 100 goes to step 203 and performs a corresponding function. At this time, the request for confirming the local time of the recipient area may be achieved by receiving a corresponding key input signal when the user presses a key for confirming a local time. In addition, if the user presets a function to automatically display a local time corresponding to an input phone number, the controller 100 goes directly to step 204 without performing step 202.

Step 204 is performed based upon the request for displaying the local time. In step 204, the controller 100 determines if the input phone number includes a country code. If the input phone number includes a country code, the controller 100 determines if the input phone number includes an area code in step 206. If the input phone number includes only a country code, the controller 100 goes to step 208 so as to confirm a country corresponding to the country code and calculate a local time and/or a local date of the corresponding country through the global time table and then goes to step 212.

If the input phone number includes both a country code and an area code in steps 204 and 206, the controller 100 calculates a local time and/or a local date in a corresponding country and a corresponding area through the global time table in step 210.

The controller 100 then displays the calculated local time and/or the local date together with the corresponding country and the corresponding area on the display module 106 in step 212.

At this time, a displayed image may be shown as in FIG. 3. Referring to FIG. 3, a recipient area 302 is displayed at a corresponding position on a world map displayed in a window of the terminal, and the phone number is displayed with a local date and a local time.

Thereafter, if the controller 100 receives an input signal for the Enter key in step 214, the controller 100 terminates the procedure for confirming a local time.

As described above, according to embodiments of the present invention, when a user wants to recognize a local date and a local time of a desired recipient area in an international call, the user can recognize the local date and the local time through one key input after the input of a phone number, instead of searching for items of a menu. In addition, time differences of all countries and all areas are stored in a communication terminal, so the user can quickly and easily recognize the local date and the local time with only one input of a country code and an area code, even though the user does not know the locations of the country and the area.

While the present invention has been shown and described with reference to certain exemplary embodiments thereof, it will be understood by those skilled in the art that various changes in form and detail may be made therein without departing from the spirit and scope of the invention. Consequently, the scope of the invention should not be limited to the embodiments, but should be defined by the appended claims and equivalents thereof.

## Claims

1. A communication terminal capable of making an international call in a communication system, the communication terminal comprising:
a memory for storing a global time table comprising countries corresponding to country codes, and time differences corresponding to the countries;
a controller for calculating at least one of a local time and a local date of a recipient area based on the global time table stored in the memory by confirming a connection number input from a user when the user inputs the connection number; and
a display module for displaying at least one of the calculated local time and the local date of the call receiving area.

2. The communication terminal as claimed in claim 1, further comprising:
a key input module including a button for generating a request for the local time of a recipient area when the user inputs the connection number.

3. The communication terminal as claimed in claim 1, wherein the memory further comprises city names corresponding to city codes, and time differences corresponding to the cities.

4. The communication terminal as claimed in claim 3, wherein the controller is configured to calculate a local time of the recipient area using the global time table stored in the memory after the input country code is confirmed and, if a country has several time differences, calculate the local time of the recipient area by confirming the input city code.

5. The communication terminal as claimed in claim 1, wherein the time differences stored in the global time table are calculated based on Greenwich mean time (GMT).

6. A method for displaying a local time of a recipient area in a communication system, the method comprising the steps of:
receiving a connection number for a call receiving area;
calculating at least one of a local time and a local date of the recipient area using a global time table previously stored in a memory based on the received connection number; and
displaying at least one of the calculated local time and the local date of the recipient area on a display module.

7. The method as claimed in claim 6, further comprising a step of:
determining if a user requests the local time when an international dialing code provided by a service provider is included in the received connection number.

8. The method as claimed in claim 6, wherein the calculating step comprises the steps of:
calculating a local time of a country using the global time table stored in the memory after a country code is confirmed in the received connection number; and
calculating the local time of the recipient area after a city code is confirmed in the received connection number when the country has several time differences.

9. The method as claimed in claim 6, wherein the time differences stored in the global time table are calculated based on Greenwich mean time (GMT).

10. The method as claimed in claim 6, wherein the displaying step comprises a step of displaying at least one of the calculated local time, the calculated local date, and the corresponding country.

11. A computer program embodied on computer-readable medium for displaying a local time of a recipient area in a communication system, comprising:
a first set of instructions for receiving a connection number for a call receiving area;
a second set of instructions for calculating at least one of a local time and a local date of the recipient area using a global time table previously stored in a memory based on the received connection number; and
a third set of instructions for displaying at least one of the calculated local time and the local date of the recipient area on a display module.

12. The computer program embodied on computer-readable medium as claimed in claim 11, wherein the second set of instructions further comprises:
a fourth set of instructions for calculating a local time of a country using the global time table stored in the memory after a country code is confirmed in the received connection number; and
a fifth set of instructions for calculating the local time of the recipient area after a city code is confirmed in the received connection number when the country has several time differences.
